# EUROPÄISCHE PATENTSCHRIFT

(11) **EP 0 749 677 B1**
(45) Veröffentlichungstag und Bekanntmachung des Hinweises auf die Patenterteilung: **19.07.2000**
(21) Anmeldenummer: 96106892.1
(22) Anmeldetag: 02.05.1996
(51) Int. Cl.: A01B 79/00

(54) **Verfahren zum Ermitteln von Daten**
Method for capturing data
Méthode pour la saisie de données

(30) Priorität: 21.06.1995 DE 19522481
(43) Veröffentlichungstag der Anmeldung: 27.12.1996
(73) Patentinhaber: Amazonen-Werke H. Dreyer GmbH & Co. KG, 49205 Hasbergen (DE)
(72) Erfinder: Scheufler, Bernd, Dr. Ing., 49205 Hasbergen (DE)

(56) Entgegenhaltungen:
- EP-A- 0 578 325
- WO-A-82/01354
- WO-A-95/31759
- DE-A- 4 322 293
- DE-A- 4 423 083
- DE-U- 9 312 542

## Beschreibung

Die Erfindung betrifft ein Verfahren zum Ermitteln von Daten gemäß des Oberbegriffes des Patentanspruches 1.

Ein derartiges Verfahren ist beispielsweise durch die deutsche Offenlegungsschrift 43 22 293 bekannt.

Der Erfindung liegt die Aufgabe zugrunde, dieses bekannte Verfahren insbesondere bezüglich Bodenbearbeitungsmaschinen zu verbessern.

Diese Aufgabe wird erfindungsgemäß durch das Kennzeichen des Anspruchs 1 gelöst. Bei der Bearbeitung einer Fläche wird der erforderliche Leistungsbedarf einer Bodenbearbeitungsmaschine oder eines Gerätes ermittelt und der jeweilige Leistungsbedarf in Verbindung mit dem Standort (DGPS) auf ein geeignetes Aufzeichnungsmittel aufgezeichnet. Diese Maßnahme erlaubt einen computergestützte Pflanzenbau. Die ermittelten Daten lassen einen Rückschluß auf die jeweils vorliegenen Bodenverhältnisse aufgrund des ermittelten Leistungsbedarfs zu. Ein großer Leistungsbedarf läßt beispielsweise den Schluß zu, daß an dieser Stelle bzw. in diesem Bereich hier eine intensivere Bearbeitung erforderlich ist.

Um die Daten später verwerten zu können, werden die Daten auf ein geeignetes Aufzeichnungsmittel aufgezeichnet.

Zu den ermittelten Daten können beispielsweise die Antriebs- und/oder Zugleistung gehören. Auch ist es möglich, die Eindring- oder Arbeitstiefe der Bodenberarbeitungswerkzeuge zu messen.

Desweiteren ist vorgesehen, daß aufgrund der ermittelten Daten die landwirtschaftliche Maschine bei nachfolgenden Bearbeitungsgängen und/oder bei den Bearbeitungsgängen der folgenden Jahre die Maschine gesteuert und geregelt wird. Hierdurch läßt sich die Bearbeitung immer weiter optimieren. Hierbei kann wichtig sein, daß die Daten laufend oder intervallweise durch neuerliche Messungen ergänzt und/oder aktualisiert werden.

Weitere Einzelheiten der Erfindung sind übrigen Unteransprüchen, der Beispielsbeschreibung und den Zeichnungen zu entnehmen. Hierbei zeigen
- Fig. 1: die schematische Datenerfassung und
- Fig. 2: die Auswertung dieser Daten und deren Einsatz bei nachfolgenden Bearbeitungsgängen oder Bearbeitungsgängen in den folgenden Jahren in schematischer Darstellung.

Der Ackerschlepper 1 weist ein Terminal 2 auf, welches mit einem DGPS-Empfänger 3 zur Ermittlung der Standortbestimmung durch Satellitennagivation ausgerüstet ist.

An den Ackerschlepper 1 ist die Bodenbearbeitungsmaschine 4 angekoppelt, welche motorisch über die Gelenkwelle von der Zapfwelle des Ackerschleppers 1 angetrieben wird.

Am Ackerschlepper 1 bzw. der Bodenbearbeitungsmaschine 4 sind Sensoren zur Ermittlung der Antriebsleistungs für die Bodenbearbeitungsmaschine 4 und für deren Zugleistung angeordnet. Mittels Datenleitung werden diese ermittelten Daten auf das Terminal 2 übertragen, welches ein Aufzeichnungsmittel aufweist.

Die jeweils ermittelten Daten (Antriebs- und Zugleistung) werden dem jeweiligen Standort entsprechend zugeordnet auf einem als Datenträger ausgebildeten Aufzeichnungsmittel abgespeichert.

Desweiteren kann die Eindringtiefe und Arbeitstiefe der Bodenbearbeitswerkzeugen der Bodenbearbeitungsmaschine mit geeigneten Sensoren gemessen und durch das Terminal aufgezeichnet werden.

Auch kann die Drehzahl, wenn ein entsprechender Sensor vorgesehen ist, der Bodenbearbeitungswerkzeuge der angetriebenen Bodenbearbeitungsmaschine 4 aufgezeichnet werden.

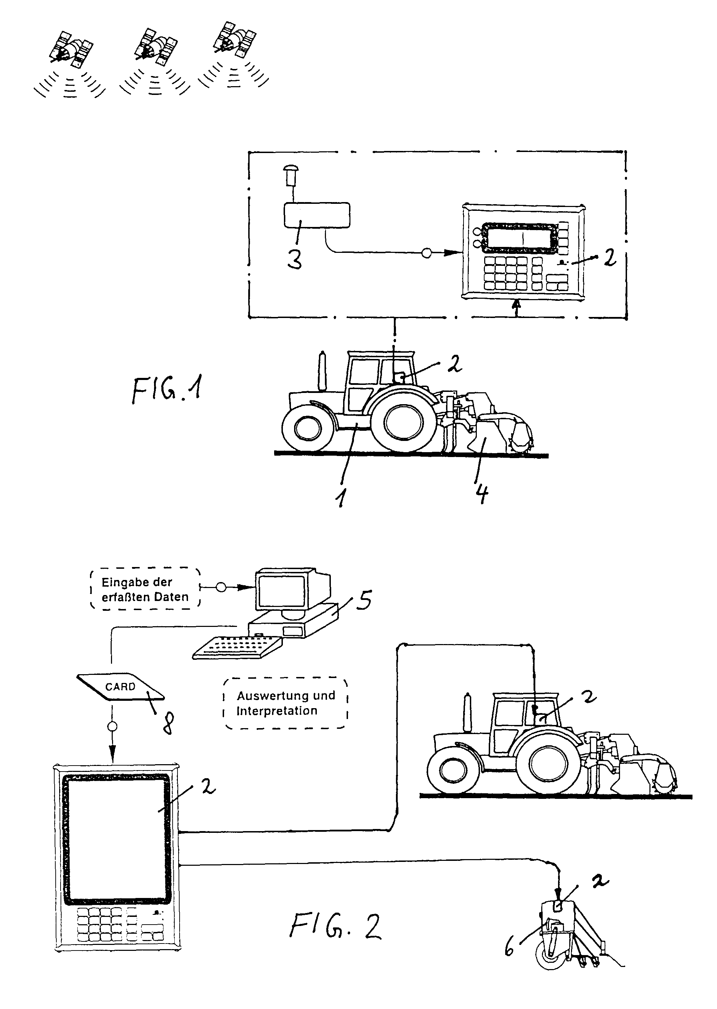

Wie Fig. 2 zeigt, werden die ermittelten Daten in einen Rechner 5 eingegeben und dort ausgewertet. Aufgrund der ermittelten Daten kann dann eine Vorgabe in dem Rechner für verschiedene Bodenbearbeitungsmaschinen 4 oder anderer Maschinen 6 errechnet werden. Diese Daten können dann mittels einer beispielsweise einer Magnetkarte 8 in einen als Terminal 2 ausgebildeten Bordrechner übertragen werden. Der auf dem Schlepper 1 angeordnete Bordrechner 2 kann dann über geeignete Übertragungsleitung die Bearbeitungsgänge in den folgenden Jahren der Maschine steuern und regeln. Es ist auch möglich, aufgrund der ermittelten Daten die nachfolgenden Bearbeitungsgänge, beispielsweise das Einsäen der Flächen mittels einer Sämaschine 6 zu steuern und zu geregeln.

Die erfaßten Daten werden durch die neuerliche Erfassung in den jeweiligen Jahren oder bei nachfolgenden Arbeitsgängen laufend oder intervallweise ergänzt und aktualisiert.

## Patentansprüche

1. Verfahren zum Ermitteln von Daten über den Zustand einer landwirtschaftlichen Fläche, dadurch gekennzeichnet, daß bei der Bearbeitung der Fläche der erforderliche Leistungsbedarf einer Bodenbearbeitungsmaschine ( 4 ) oder eines - gerätes ermittelt und der jeweilige Leistungsbedarf in Verbindung mit dem jeweiligen Standort, der über ein Standortbestimmungssystem, beispielsweise DGPS, ermittelt wird, auf ein geeignetes Aufzeichnungsmittel aufgezeichnet wird, daß aufgrund der ermittelten Daten die landwirtschaftliche Maschine ( 4, 6 ) bei nachfolgenden Bearbeitungsgängen und/oder bei den Bearbeitungsgängen der folgenden Jahre gesteuert und/oder geregelt wird, daß aufgrund der ermittelten Daten ein Rückschluß auf die jeweils vorliegenden Bodenverhältnisse erfolgt.

2. Verfahren nach Anspruch 1, dadurch gekennzeichnet, daß die Antriebs- und/oder Zugleistung gemessen und aufgezeichnet wird.

3. Verfahren nach Anspruch 1, dadurch gekennzeichnet, daß die Eindringtiefe/Arbeitstiefe der Bodenbearbeitungswerkzeuge gemessen und aufgezeichnet wird.

4. Verfahren nach Anspruch 1, dadurch gekennzeichnet, daß die Drehzahl der Bodenbearbeitungswerkzeuge einer angetriebenen Bodenbearbeitungsmaschine (4) gemessen und aufgezeichnet wird.

5. Verfahren nach einem oder mehreren der vorstehenden Ansprüche, dadurch gekennzeichnet, daß die Daten laufend oder intervallweise durch neuerliche Messungen ergänzt und/oder aktualisiert werden.

## Claims

1. Method of determining data concerning the state of an agricultural area, characterised in that, in order to cultivate the area, the necessary output requirement of a ground cultivating machine (4) or of a ground cultivating apparatus is determined, and the actual output requirement, in conjunction with the actual position, which is determined via a position determining system, DGPS for example, is recorded on a suitable recording means, in that the agricultural machine (4, 6) is controlled and/or regulated on the basis of the determined data during consecutive cultivating operations and/or during the cultivating operations of the following years, and in that conclusions are drawn concerning the actually existent ground conditions on the basis of the determined data.

2. Method according to claim 1, characterised in that the driving power and/or the tractive power are/is measured and recorded.

3. Method according to claim 1, characterised in that the depth of penetration/working depth of the ground cultivating tools is measured and recorded.

4. Method according to claim 1, characterised in that the speed of the ground cultivating tools of a driven ground cultivating machine (4) is measured and recorded.

5. Method according to one or more of the preceding claims, characterised in that the data is supplemented and/or updated, continuously or at intervals, as a result of recent measurements.

## Revendications

1. Procédé pour déterminer des données concernant l'état d'une surface agricole,
caractérisé en ce que
lors du traitement de la surface on détermine la puissance demandée par une machine ou un appareil de travail du sol (4) et on détermine la demande de puissance, respective, en liaison avec l'emplacement respectif obtenu par un système de localisation, par exemple le système DGPS, et on enregistre sur un moyen d'enregistrement,
et à partir des données saisies on commande et/ou on régule la machine agricole (4, 6) au cours des opérations suivantes et/ou pour les travaux au cours des années suivantes, et à partir des données saisies on tire une conclusion concernant les conditions de sol existant respectivement.

2. Procédé selon la revendication 1,
caractérisé en ce qu'
on mesure et on enregistre la puissance d'entraînement et/ou de traction.

3. Procédé selon la revendication 1,
caractérisé en ce qu'
on mesure et on enregistre la profondeur de pénétration/profondeur de travail des outils de travail du sol.

4. Procédé selon la revendication 1,
caractérisé en ce qu'
on mesure et on enregistre la vitesse de rotation des outils de travail du sol d'une machine de travail du sol (4), motrice.

5. Procédé selon l'une ou plusieurs des revendications précédentes,
caractérisé en ce qu'
on complète et/ou on actualise les données de manière continue ou par intervalles en effectuant de nouvelles mesures.
